Europäisches Patentamt

European Patent Office

Office européen des brevets

(11) Publication number: **0 498 891 A1**

# EUROPEAN PATENT APPLICATION
## published in accordance with Art. 158(3) EPC

(21) Application number: 91914193.7

(22) Date of filing: 08.08.91

(86) International application number:
**PCT/JP91/01065**

(87) International publication number:
**WO 92/04668 (19.03.92 92/07)**

(51) Int. Cl.5: **G05D 13/62**, G05D 3/12, H02P 5/00, G05B 13/04

(30) Priority: **03.09.90 JP 232848/90**

(43) Date of publication of application:
**19.08.92 Bulletin 92/34**

(84) Designated Contracting States:
**DE IT**

(71) Applicant: **FANUC LTD.**
**3580, Shibokusa Aza-Komanba, Oshino-mura Minamitsuru-gun, Yamanashi 401-05(JP)**

(72) Inventor: **IWASHITA, Yasusuke, Fanuc Dai-3 Vira-karamatsu**
**3527-1, Shibokusa, Oshino-mura Minamitsuru-gun, Yamanashi 401-05(JP)**

(74) Representative: **Brunner, Michael John et al GILL JENNINGS & EVERY 53-64 Chancery Lane London WC2A 1HN(GB)**

(54) **SYSTEM FOR CONTROLLING SERVOMOTOR.**

(57) A system for controlling a servomotor in which a controlled system is a servomotor for driving a mechanical system of low rigidity such as a robot arm, and the control error of the torque of command value of the servomotor is corrected according to the estimate of a disturbance torque applied to the mechanical system. The system comprises a calculating means (15) for calculating an actual acceleration (a) of the mechanical system from its actual velocity (VL), a signal converting means (16) for converting the torque command of a servomotor (3) to an estimated acceleration (an) of the mechanical system based on the torque command, and an estimating means (18) for estimating the disturbance torque applied to the mechanical system by calculating a deviation (Δa) of the output of the calculating means (15) from the output of the signal converting means (16). Thereby, the effect of the disturbance changing nonlinearly due to a spring constant and a damping constant is suppressed.

F i g . 1

TECHNICAL FIELD

The present invention relates to a servomotor control system for controlling the feed axis of a machine tool, robot arm and the like, and more specifically, to a servomotor control system for restricting a disturbing torque applied to a control system by software.

BACKGROUND ART

Errors occur in a speed and position commanded to a servo mechanism of an industrial robots and machine tools due to the influence of a disturbing torque applied to a machine system such as the feed axis and robot arm thereof. Therefore, when a servomotor serving as a drive source for the machine system is controlled, a torque command applied to the servomotor must be corrected by estimating a disturbing torque applied to an input to the machine system, so as to eliminate the influence of a disturbing torque.

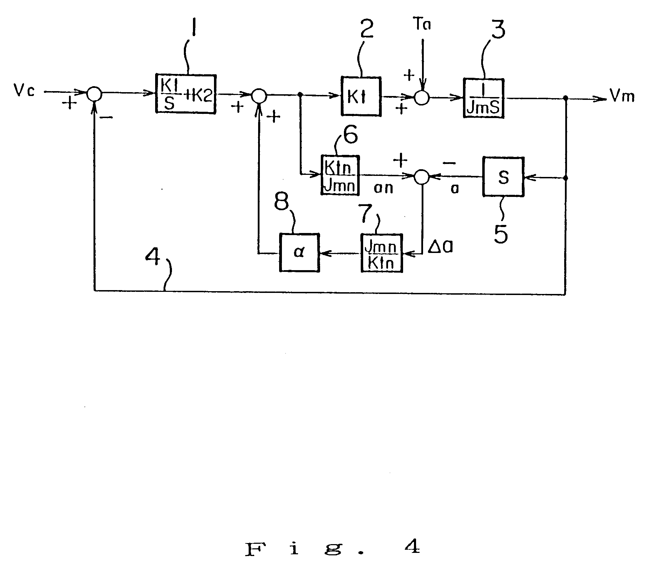

Figure 4 is a block diagram showing an example of a conventional speed control system, wherein a transfer element 1 designates a PI control circuit including an integral gain k1 and proportional gain k2, and a transfer element 2 designates an amplifier circuit of a torque command including a torque constant kt.

Although a servomotor 3 is controlled by a difference signal obtained by comparing the actual speed Vm thereof with a speed command Vc through a feedback loop 4, a disturbing torque Ta is generally included in the above torque command based on this difference signal. Therefore, since the torque command must be corrected in accordance with a magnitude of the disturbing torque Ta, a magnitude of the disturbing torque Ta is estimated by calculating an actual acceleration a from an actual speed signal through a differential element 5 and an estimated acceleration an of the servomotor 3 based on a torque command signal at the input side of the transfer element 2, respectively, to thereby arrange a minor loop for correcting a control error.

More specifically, a calculation unit 6 for calculating the estimated acceleration of the servomotor 3 has a constant of proportion (ktn/Jmn) obtained by dividing an estimated torque constant ktn by an estimated motor inertia Jmn and a transfer element 7 has a reciprocal constant of proportion (Jmn/ktn). The transfer element 7 calculates a difference Δa between the signal a and the signal an, to thus determine an estimated value of the disturbing torque, and outputs a normalized correction value corresponding to the estimated disturbance. A transfer element 8 is a correction circuit including a correction coefficient α that can be arbitrarily set between 0 and 1.

According to the servomotor control system arranged as described above, when a machine system coupled to the servomotor 3 has a certain rigidity, the influence of the disturbing torque can be alleviated to some extent.

Nevertheless, in the conventional servomotor control system, when the servomotor 3 is not rigidly coupled to the machine system, a disturbing torque value is changed in accordance with a difference between a motor speed and a speed of the machine system, and thus the disturbing torque is not directly reflected at an acceleration of the motor. Therefore, a problem arises in that a control error cannot be effectively corrected, particularly when a disturbance has a magnitude exceeding a half of a resonance frequency of the machine system.

DISCLOSURE OF THE INVENTION

Taking the above into consideration, an object of the present invention is to provide a servomotor control system capable of effectively eliminating a disturbance to a servo system contained in a machine system with a low rigidity.

To attain the above object, according to the present invention, there is provided a servomotor control system employing a servomotor for driving a machine system with a low rigidity, as an object to be controlled, and correcting a control error of a torque command value to the servomotor based on an estimated value of a disturbing torque applied to the machine system, which comprises a calculation means for calculating an actual acceleration of the machine system from an actual speed of the machine system, a signal conversion means for converting the torque command to the servomotor to an estimated acceleration of the machine system based on the torque command, and an estimation means for estimating the disturbing torque applied to the machine system by calculating a difference between outputs from the calculating means and outputs from signal conversion means.

The servomotor control system according to the present invention restricts an influence applied to a torque command by a torque command which is non-linearly changed by a spring constant and dumper constant by correcting a control error by determining an estimated value of a disturbing torque based on a current command to the servomotor and the actual acceleration of the machine system, when the machine system with a low rigidity is speed controlled or positional controlled by the servomotor.

BRIEF DESCRIPTION OF THE DRAWINGS

Figure 1 is a block diagram of a control system showing an embodiment according to the present invention;

Figure 2 is a diagram showing an example of a servomotor load system;

Figure 3 is a diagram showing a positional control error to a disturbing torque; and

Figure 4 is a block diagram showing an example of a conventional speed control system.

## BEST MODE OF CARRYING OUT THE INVENTION

An embodiment of the present invention will be described below with reference to the drawings.

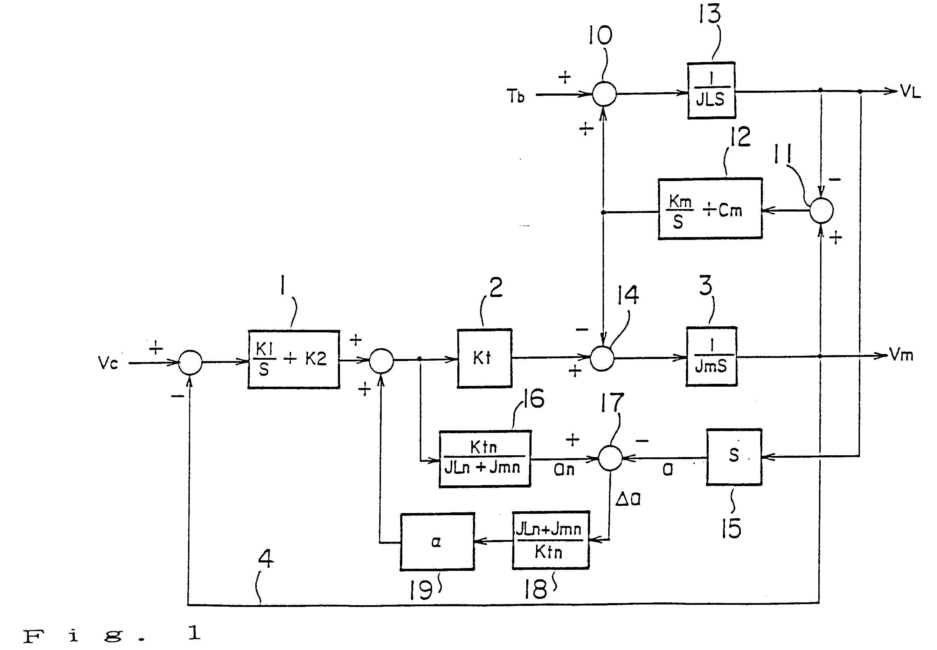

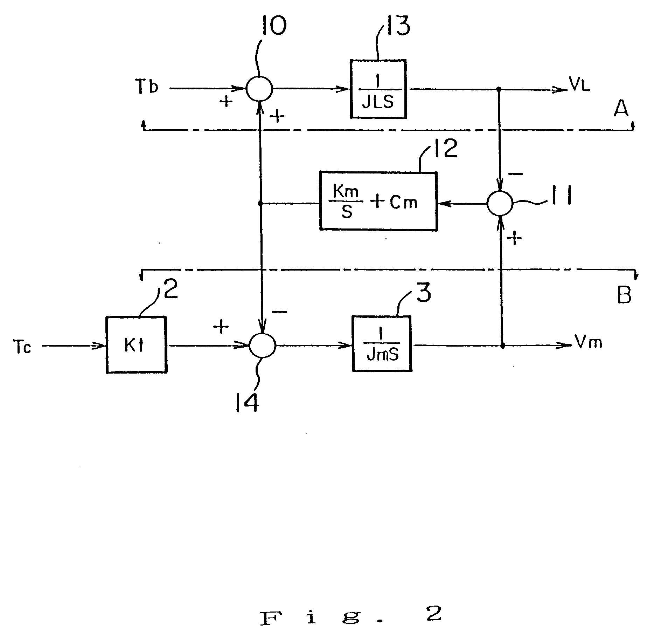

Figure 1 is a block diagram showing a servomotor control system according to the present invention, and Figure 2 shows a model of a spring system serving as the coupling portion of a servomotor serving as an object to be controlled, and a load system coupled to the output axis of the servomotor.

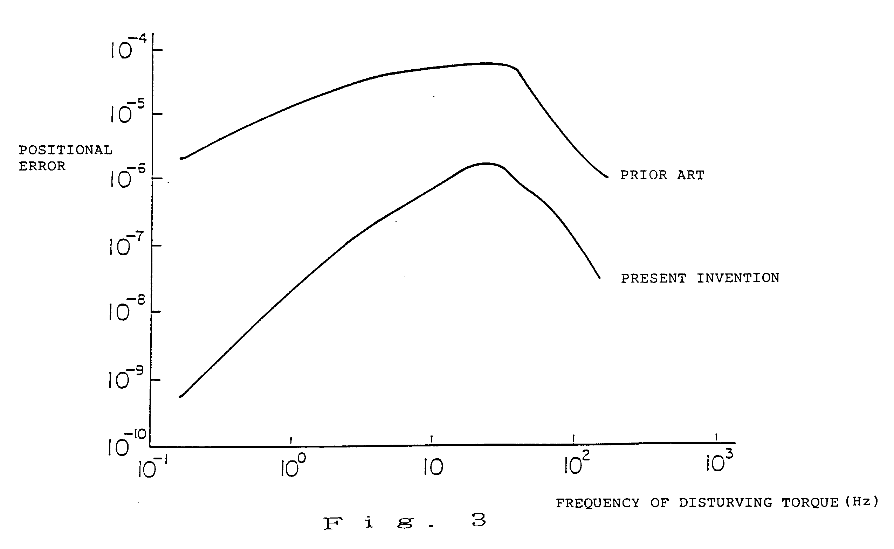

In Figure 2, 2 and 3 correspond to the transfer element 2 and servomotor 3 in Figure 4, respectively, and a disturbing load Tb in the Figure is, e.g., a cutting load or the like to be input to an adder 10 of a machine side A. The machine side A is spring-coupled to a motor side B through a transmission means or the like coupled to a motor shaft. As a result, a difference between a motor speed Vm and a machine speed VL from an adder 11 is amplified by a transfer element 12 including a spring constant Km and damper constant Cm, and an output from the transfer element 12 is given as a disturbance to the machine side A and motor side B, respectively.

Therefore, disturbances such as friction, torque ripple and the like from the motor side B are supplied to the transfer element 13 of a machine system including a load torque JL as a plus input to the adder 10, and are supplied to the adder 14 of the motor side B as a minus input, in addition to the disturbance Tb such as the cutting load and the like.

Figure 1 shows an example of a servomotor control system employing a servomotor 3 for driving a machine system with a low rigidity as an object to be controlled. Transfer elements 1 and 2 serving as a compensation circuit to a speed command Vc of the servomotor 3 and a feedback loop 4 correspond to the transfer elements 1, 2 and feed-back loop 4 in Figure 4, respectively. In this example, a not shown position loop may be provided at the outside of a speed control system, for improving a positional accuracy by using a so-called closed loop system.

The present invention arranges a minor loop for correcting a control error by feeding back an output from the above transfer element 13, i.e., a machine speed VL, to a control system, to thereby correct a control error to a torque command value Tc to the servomotor based on an estimated value of a disturbing torque Tb applied to a machine system.

In the example of Figure 1, the machine speed VL is input to a differential element 15 instead of a motor speed Vm and a value obtained by differentiating the machine speed VL is used as an actual acceleration a, which is compared with an estimated acceleration an of the machine system obtained by converting a torque command signal to the input of the transfer element 2, to thereby estimate a magnitude of the disturbing torque Tb applied to the machine system.

More specifically, a transfer element 16 for calculating the estimated acceleration an of the machine system is composed of a constant of proportion obtained by dividing an estimated torque constant ktn by the sum of an estimated motor inertia Jmn and estimated load torque JLn:

$$ktn/(Jmn + JLn)$$

Further, a calculation unit 17 calculates a difference Δa between the actual speed a and the estimated acceleration an, a transfer element 18 calculates an estimated value of the disturbing torque based on the difference Δa, and a transfer element 19 outputs a normalized correction value corresponding to a magnitude of the estimated disturbing torque. In this case, since a torque constant kt, motor inertia Jm, and load torque JL are inherent to the control system and machine system, and have predetermined frequency characteristics, the estimated values ktn, Jmn and JLn thereof are used in the same way as those of the conventional system shown in Figure 4.

The transfer element 19 is a correction circuit for correcting the disturbing torque value estimated as described above, and includes a correction coefficient α that can be arbitrarily set between 0 and 1. This coefficient value α is set in accordance with the above transfer element 12 determining a coupling constant of the machine side and motor side, and is generally about 0.8.

Figure 3 is a diagram showing a positional control error to the disturbing torque when a position loop is arranged by using the speed control system of Figure 1. A curve shown as a conventional example in the Figure shows control characteristics obtained when the control system of Figure 4 is simulated, wherein the abscissa is a logarithmic axis showing a frequency of the disturbing torque by a logarithmic expression and the ordinate is a logarithmic axis showing a control error of the machine position. Both the servo system of the conventional example and the servo system of the present invention are simulated by using a software program, by setting the coefficient values Km and Cm of the transfer element 12 so that a cut-off frequency is 30 Hz and a dumping coefficient is 0.1, and setting the coefficient value $\alpha$ to 1 so that a correction output fed back from the transfer element 20 is 100%.

The curve of the conventional example shows that a positional error of the servo system is on an order of $10^{-5}$ as a maximum value, whereas the control characteristics of the speed control system of the present invention show that a maximum value of the positional error is restricted to $10^{-6}$ or less, by correcting a control error to the torque command value Tc based on the actual acceleration of the machine system.

As shown here, in the system of the present invention, when a machine system has a low rigidity, the influence of a disturbance applied to the machine system can be alleviated, and thus a servo system able to accurately follow a commanded control amount can be arranged.

As described above, according to the present invention, since the influence applied to a torque command by a disturbance non-linearly changed by a spring constant and dumper constant is restricted by correcting a control error by determining an estimated value of a disturbing torque based on a current command to the servomotor and an actual acceleration of the machine system, the servo system can accurately follow a commanded control amount.

**Claims**

1.  A servomotor control system employing a servomotor for driving a machine system with a low rigidity, as an object to be controlled, and correcting a control error of a torque command value to the servomotor based on an estimated value of a disturbing torque applied to the machine system, comprising:

    a calculation means for calculating an actual acceleration of said machine system from an actual speed of said machine system;

    a signal conversion means for converting a torque command to said servomotor to an estimated acceleration of said machine system based on said torque command; and

    an estimation means for estimating the disturbing torque applied to said machine system by calculating a difference between an output from said calculation means and an output from said signal conversion means.

2.  A servomotor control system according to claim 1, further comprising a correction means for correcting the disturbing torque value estimated by said estimation means, for correcting said control error, by adding a correction output therefrom to the torque command value to said servomotor.

3.  A servomotor control system according to claim 2, wherein said correction means includes a correction coefficient variably set within a range of from 0 to 1 and said control error is corrected by determining said correction output in accordance with a dumping coefficient of said machine system.

Fig. 1

F i g .  2

POSITIONAL ERROR

PRIOR ART

PRESENT INVENTION

FREQUENCY OF DISTURVING TORQUE (Hz)

Fig. 3

EP 0 498 891 A1

8

F i g . 4

# INTERNATIONAL SEARCH REPORT

International Application No PCT/JP91/01065

| **I. CLASSIFICATION OF SUBJECT MATTER** (if several classification symbols apply, indicate all) [6] |
|---|

According to International Patent Classification (IPC) or to both National Classification and IPC

Int. Cl$^5$   G05D13/62, 3/12, H02P5/00, G05B13/04

| **II. FIELDS SEARCHED** |
|---|

| Minimum Documentation Searched [7] |
|---|

| Classification System [i] | Classification Symbols |
|---|---|
| IPC | G05D13/62, 3/12, 15/00, G05B13/04 |

Documentation Searched other than Minimum Documentation
to the Extent that such Documents are Included in the Fields Searched [8]

Jitsuyo Shinan Koho                    1971 - 1991
Kokai Jitsuyo Shinan Koho         1971 - 1991

| **III. DOCUMENTS CONSIDERED TO BE RELEVANT** [9] | | |
|---|---|---|
| Category [*] | Citation of Document, [11] with indication, where appropriate, of the relevant passages [12] | Relevant to Claim No. [13] |
| Y | JP, A, 2-136906 (Mitsubishi Electric Corp.), May 25, 1990 (25. 05. 90), (Family: none) | 1-3 |
| Y | JP, A, 2-10411 (Mitsubishi Metal Corp.), January 16, 1990 (16. 01. 90), Line 5, upper left column to line 20, lower left column, page 3 (Family: none) | 1-3 |
| A | JP, A, 3-80311 (Mitsutoyo Corp.), April 5, 1991 (05. 04. 91), (Family: none) | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| **IV. CERTIFICATION** | |
|---|---|
| Date of the Actual Completion of the International Search | Date of Mailing of this International Search Report |
| October 31, 1991 (31. 10. 91) | November 18, 1991 (18. 11. 91) |
| International Searching Authority | Signature of Authorized Officer |
| Japanese Patent Office | |

Form PCT/ISA/210 (second sheet) (January 1985)